# EUROPÄISCHE PATENTSCHRIFT

(11) **EP 3 160 000 B1**
(45) Veröffentlichungstag und Bekanntmachung des Hinweises auf die Patenterteilung: **23.12.2020**
(21) Anmeldenummer: 15190553.6
(22) Anmeldetag: 20.10.2015
(51) Int. Cl.: H02J 7/00

(54) **EINSTELLEN EINES ARBEITSPUNKTES EINES BETRIEBSBEREITEN ELEKTRISCHEN ENERGIESPEICHERS**
ADJUSTING AN OPERATING POINT OF AN ELECTRICAL ENERGY STORAGE DEVICE WHICH IS READY FOR OPERATION
REGLAGE D'UN POINT DE TRAVAIL D'UN SYSTEME DE STOCKAGE D'ENERGIE ELECTRIQUE PRET A FONCTIONNER

(43) Veröffentlichungstag der Anmeldung: 26.04.2017
(73) Patentinhaber: Siemens Aktiengesellschaft, 80333 München (DE)
(72) Erfinder: Ecker, Martin Ernst, 3542 Jaidhof (AT)
(74) Vertreter: Maier, Daniel Oliver

(56) Entgegenhaltungen:
- EP-A1- 0 864 876
- WO-A1-2013/107497
- JP-A- 2008 017 691
- JP-A- 2008 306 895
- US-A1- 2006 012 378

## Beschreibung

### Technisches Gebiet

Die Erfindung betrifft ein Verfahren zum Einstellen eines Arbeitspunktes eines betriebsbereiten elektrischen Energiespeichers durch einen Benutzer, wobei der Energiespeicher zumindest einen Speicherkondensator umfasst, dessen Lebensdauer bei Normalbetrieb überproportional von der Betriebsspannung abhängt, sowie eine entsprechende Vorrichtung. "Bei Normalbetrieb" soll klarstellen, dass die Lebensdauer im Normalbetrieb bei zulässigen Betriebsspannungen gemeint ist. Dass jeder Kondensator bei außergewöhnlichen Umständen, wie einer unvorhergesehenen Überspannung, zerstört wird und seine Lebensdauer dadurch abläuft, fällt nicht unter die Erfindung.

Speicherkondensatoren, deren Lebensdauer im Sinne der Erfindung bei Normalbetrieb überproportional von der Betriebsspannung abhängt, sind insbesondere solche, wo die Lebensdauer exponentiell mit steigender Betriebsspannung sinkt, wie etwa sogenannte Superkondensatoren. Superkondensatoren (englisch Supercapacitors, SC), auch Ultrakondensatoren genannt, sind elektrochemische Kondensatoren und als solche eine Weiterentwicklung der Doppelschichtkondensatoren (englisch electric double-layer capacitor, EDLC). Sie besitzen im Gegensatz zu Keramik-, Folien- und Elektrolytkondensatoren kein Dielektrikum im herkömmlichen Sinne. Die Kapazitätswerte dieser Kondensatoren ergeben sich aus der Summe zweier hochkapazitiver Speicherprinzipien: aus der statischen Speicherung elektrischer Energie durch Ladungstrennung in Helmholtz-Doppelschichten in einer Doppelschichtkapazität, und aus der elektrochemischen Speicherung elektrischer Energie durch faradayschen Ladungstausch mit Hilfe von Redoxreaktionen in einer Pseudokapazität. Doppelschicht- und Pseudokapazität summieren sich in allen elektrochemischen Kondensatoren zu einer Gesamtkapazität. Sie haben jedoch, je nach Ausführung der Elektroden, einen stark unterschiedlichen Anteil an der Gesamtkapazität.

Superkondensatoren gliedern sich, bedingt durch die Ausführung ihrer Elektroden, in drei unterschiedliche Kondensatorfamilien:
- Doppelschichtkondensatoren besitzen Kohlenstoffelektroden oder deren Derivate mit einer sehr hohen statischen Doppelschichtkapazität. Der Anteil der faradayschen Pseudokapazität an der Gesamtkapazität ist nur gering.
- Pseudokondensatoren besitzen Elektroden aus Metalloxiden oder aus leitfähigen Polymeren und haben einen sehr hohen Anteil an faradayscher Pseudokapazität.
- Hybridkondensatoren besitzen asymmetrische Elektroden, eine mit einer hohen Doppelschicht-, die zweite mit einer hohen Pseudokapazität. Zu den Hybridkondensatoren gehören die Lithium-Ionen-Kondensatoren.

Doppelschichtkondensatoren, insbesondere Superkondensatoren, finden als Energiespeicher bzw. Energiespeichermodule Verwendung, aber z.B. auch als Puffermodul oder als unterbrechungsfreie Stromversorgung (DC-USV-Modul). Entsprechend ist die Betriebsspannung die Endspannung oder die Ladeschlussspannung der Speicherkondensatoren.

### Stand der Technik

Ein elektrochemischer Kondensator, insbesondere ein Doppelschichtkondensator in Form eines Ultra- oder Superkondensators, hat einen Lebensdauerverlauf, der - neben der Umgebungstemperatur und der Anzahl der Lastzyklen - auch sehr stark von der Betriebsspannung abhängig ist: die Lebensdauer sinkt exponentiell mit der steigender Betriebsspannung bzw. mit steigender Umgebungstemperatur. Die Speicherenergie in den - meist mehreren - Kondensatoren eines Energiespeichers steigt exponentiell mit der Betriebsspannung. Innerhalb dieser Rahmenbedingungen muss für einen konkreten Anwendungsfall, also für einen bestimmten Energiespeicher, immer ein Kompromiss gefunden werden, um den Arbeitspunkt zu fixieren, also eine bestimmte Betriebsspannung einzustellen.

Bei der Entwicklung eines bestimmten Energiespeicher-Geräts wird die Betriebsspannung daher werksseitig in der Regel einmal gemäß gewünschter Lebensdauer bei maximaler (!) Umgebungstemperatur festgelegt und kann vom Benutzer nicht ohne Weiteres verändert werden. Die Betriebsspannung bleibt also danach fixiert, und die Lebensdauer des Energiespeichers (bzw. seines Speicherkondensators oder seiner Speicherkondensatoren) ist folglich nur mehr abhängig von der tatsächlichen Umgebungstemperatur und den Lastzyklen.

Bei hoher Umgebungstemperatur ist die Lebensdauer des Energiespeichers bzw. seiner Speicherkondensatoren entsprechend gering und die Speichereinheit muss entsprechend oft getauscht werden. Oder der Energiespeicher muss für eine lange Lebensdauer entwickelt werden, wobei der Speicherinhalt deutlich reduziert werden muss.

Aus der Schrift WO 2013/107497 A1 sind eine Vorrichtung sowie ein Verfahren zum Einstellen eines Arbeitspunktes eines betriebsbereiten, elektrischen Energiespeichers bzw. eines Speicherkondensators bekannt. Dabei wird die Lebensdauer des Speicherkondensators durch die Temperatur und die Betriebsspannung beeinflusst. Aufgrund einer Beschleunigung elektrochemischer Prozesse bei steigender Temperatur sinkt die Kapazität und Leitfähigkeit des Speicherkondensators. Anhand von Informationen (z.B. Kapazitätswert des Speicherkondensators, notwendiger Energie, um die Ladung des Kondensators zu erreichen oder aufrechtzuerhalten, etc.) wird die Betriebsspannung des Speicherkondensators derart angepasst, dass die notwendige Energie möglichst konstant gehalten wird. Es besteht aber für einen Benutzer keine Möglichkeit Einfluss auf eine Lebensdauer des Speicherkondensators zu nehmen.

Weiterhin ist aus der Schrift US 2006/012378 A1 eine Vorrichtung bekannt, mit welcher auf Basis einer Betriebsspannung und einer Temperatur eines Speicherkondensators eine Lebensdauer des Speicherkondensators abgeschätzt und einem Benutzer angezeigt werden kann. Allerdings wird auch bei dieser Vorrichtung von einer vorgegebenen Betriebsspannung ausgegangen und dem Benutzer keine Möglichkeit gegeben die Lebensdauer direkt zu beeinflussen.

### Darstellung der Erfindung

Es ist daher eine Aufgabe der vorliegenden Erfindung, die Nachteile der vorgegebenen Betriebsspannung bei einem elektrischen Energiespeicher zu verringern.

Diese Aufgabe wird durch ein Verfahren mit den Merkmalen des Patentanspruchs 1 gelöst, nämlich ein Verfahren zum Einstellen eines Arbeitspunktes eines betriebsbereiten elektrischen Energiespeichers durch einen Benutzer, wobei der Energiespeicher zumindest einen Speicherkondensator umfasst, dessen Lebensdauer bei Normalbetrieb überproportional von der Betriebsspannung abhängt. Dabei ist vorgesehen, dass Informationen über die Lebensdauer des Speicherkondensators in Abhängigkeit von zumindest der Betriebsspannung zur Verfügung gestellt werden und die Betriebsspannung des Speicherkondensators in Abhängigkeit von einer gewünschten Lebensdauer eingestellt wird, welche Lebensdauer vom Benutzer festgelegt wird.

Unter einem betriebsbereiten elektrischen Energiespeicher wird hier ein Energiespeicher verstanden, der die Produktion mit einer bestimmten eingestellten Betriebsspannung verlassen hat und grundsätzlich ohne weitere Einstellungen von einem Benutzer in Betrieb genommen werden kann. Das erfindungsgemäße Verfahren sieht nun vor, dass der Benutzer den Arbeitspunkt dieses Energiespeichers vor der ersten Benutzung, während des Betriebs oder bei einer neuerlichen Inbetriebnahme ändert, indem aufgrund seiner Einstellung einer Lebensdauer die Betriebsspannung entsprechend geändert wird, auf Basis des ihm vorliegenden Zusammenhangs zwischen einerseits Lebensdauer und andererseits Betriebsspannung.

Der Benutzer des Energiespeichers kann somit einen oder mehrere Arbeitspunkte vorgeben, insbesondere zusätzlich zu einem werksseitig voreingestellten Arbeitspunkt. Damit kann eine Anpassung der Funktion des Energiespeichers für eine lange Lebensdauer in Richtung höherer Umgebungstemperatur und geringerer Speicherinhalt erfolgen, oder umgekehrt in Richtung größerer Speicherinhalt bei niedrigerer Umgebungstemperatur. Zudem kann nach wie vor der Arbeitspunkt in den Bereich hohe Umgebungstemperatur und großer Speicherinhalt bei entsprechend reduzierter Lebensdauer gelegt werden.

Eine Ausführungsform der Erfindung sieht vor, dass die Information über die Lebensdauer des Speicherkondensators in einer Steuereinrichtung des Energiespeichers hinterlegt ist und die Betriebsspannung des Speicherkondensators durch die Steuereinrichtung in Abhängigkeit von einer vom Benutzer festgelegten Lebensdauer eingestellt wird.

Denkbar wäre also, dass der Benutzer durch eine Eingabe am Energiespeicher festlegt, er möchte die Lebensdauer verlängern, und die Steuereinrichtung aus der vom Benutzer eingegebenen gewünschten Lebensdauer eine entsprechende Betriebsspannung errechnet und diese einstellt.

Eine andere, beispielhafte Ausführungsform, welche sich nicht im Schutzumfang der Erfindung befindet, sieht vor, dass die Information über den Zusammenhang von Lebensdauer und/oder Speicherinhalt des Speicherkondensators mit der Betriebsspannung des Speicherkondensators dem Benutzer direkt zur Verfügung steht und die Betriebsspannung des Speicherkondensators, die der vom Benutzer gewünschten Lebensdauer oder dem vom Benutzer gewünschten Speicherinhalt entspricht, vom Benutzer eingestellt wird. Der Benutzer kennt also, aus einem Benutzerhandbuch oder einer anderen Informationsquelle, den Zusammenhang der von ihm gewünschten Größe (Lebensdauer oder Speicherinhalt) mit der Betriebsspannung und stellt dann am Energiespeicher selbst die entsprechende Betriebsspannung ein. In diesem Fall muss am oder im Energiespeicher keine Steuereinrichtung vorgesehen sein, in welcher die Information hinterlegt ist.

Um auch die Umgebungstemperatur als Einflussgröße berücksichtigen zu können, kann vorgesehen sein, dass Informationen über die Lebensdauer des Speicherkondensators in Abhängigkeit von der Umgebungstemperatur zur Verfügung gestellt werden und die Betriebsspannung des Speicherkondensators durch die Steuereinrichtung in Abhängigkeit einerseits von einer vom Benutzer festgelegten Lebensdauer und andererseits von einer vorgegebenen Umgebungstemperatur eingestellt wird.

Etwa kann vorgesehen werden, dass in der Steuereinrichtung des Energiespeichers Informationen über die Lebensdauer des Energiespeichers in Abhängigkeit von der Umgebungstemperatur hinterlegt sind und die Betriebsspannung des Energiespeichers durch die Steuereinrichtung in Abhängigkeit von einer vom Benutzer festgelegten Lebensdauer (oder von einem vom Benutzer vorgegebenen Speicherinhalt) und zusätzlich in Abhängigkeit von einer vorgegebenen Umgebungstemperatur eingestellt wird. Bei einer nicht im Schutzumfang der Erfindung liegenden Ausführungsform können die Informationen auch dem Benutzer selbst, wieder mittels Handbuches oder Ähnlichem, zur Verfügung gestellt werden und dieser stellt dann selbst direkt die entsprechende Betriebsspannung am Energiespeicher bzw. am Speicherkondensator ein.

Die Umgebungstemperatur wird in der Regel nicht vom Benutzer vorgegeben, sondern ist werksseitig eingestellt worden oder wird laufend ermittelt, etwa durch Messung mittels eines Messfühlers des Energiespeichers.

Denkbar ist, dass der Benutzer eine gewünschte Lebensdauer von sich aus vorgibt. Unter gewünschter Lebensdauer können konkrete Angaben fallen, wie "50.000 Stunden". Wertmäßig unbestimmte Angaben, wie "Lebensdauer erhöhen" fallen nicht in den Schutzumfang der durch die angefügten Ansprüche definierten Erfindung.

Ebenso sollen unter gewünschten Speicherinhalt konkrete Angaben fallen, wie eine bestimmte Anzahl von Ws oder kWh, oder relative Angaben, wie "Speicherinhalt verringern".

Die Einstellung einer Lebensdauer ist je nach Energiespeicher nur in bestimmten Grenzen möglich. Dem Benutzer muss gegebenenfalls von der Steuereinrichtung mitgeteilt werden, wenn eine gewünschte Lebensdauer nicht erreichbar ist, bzw. müssen solche Grenzen für den Benutzer aus dem Handbuch oder Ähnlichem entnehmbar sein.
Um den Benutzer besser über mögliche Arbeitspunkte zu informieren, kann vorgesehen sein, dass dem Benutzer aufgrund der in der Steuereinrichtung des Energiespeichers hinterlegten Informationen unterschiedliche mögliche Lebensdauern angezeigt werden und der Benutzer eine dieser Lebensdauern auswählt, wonach die Steuereinrichtung die Betriebsspannung entsprechend einstellt. Auf diese Weise kann der Benutzer eine gezielte Auswahl aus möglichen vorgegebenen Werten treffen und den geeignetsten auswählen.

Da eine Erhöhung der Lebensdauer des Energiespeichers mit einer Verringerung des Speicherinhalts einhergeht, kann vorgesehen sein, dass dem Benutzer basierend auf der von ihm festgelegten Lebensdauer angezeigt wird, wie groß der korrespondierende Speicherinhalt ist. Die Steuereinrichtung kann in diesem Fall - basierend auf Informationen über den Zusammenhang von Betriebsspannung und Speicherinhalt - aus der gewünschten Lebensdauer den daraus resultierenden Speicherinhalt berechnen und dem Benutzer anzeigen. Dieser kann dann, falls dieser Speicherinhalt für ihn nicht ausreichend ist, nochmals die Einstellung für die Lebensdauer ändern.

Selbstverständlich kann auch eine zum Speicherinhalt proportionale Größe berechnet und angezeigt werden, etwa die verbleibende Betriebsdauer (z.B. Pufferzeit) des Energiespeichers.

Eine erfindungsgemäße Vorrichtung zum Einstellen eines Arbeitspunktes eines betriebsbereiten elektrischen Energiespeichers durch einen Benutzer, wobei der Energiespeicher zumindest einen Speicherkondensator umfasst, dessen Lebensdauer bei Normalbetrieb überproportional von der Betriebsspannung abhängt und wobei diese Vorrichtung zum Durchführen des erfindungsgemäßen Verfahrens ausgebildet ist, umfasst zumindest:
- eine Steuereinrichtung für den Energiespeicher, in welcher Informationen über die Lebensdauer des Speicherkondensators in Abhängigkeit von zumindest der Betriebsspannung hinterlegt sind und mit welcher die Betriebsspannung des Energiespeichers in Abhängigkeit von einer gewünschten Lebensdauer eingestellt werden kann, und
- eine mit der Steuereinrichtung verbundene Einstellvorrichtung, mit welcher der Benutzer zumindest eine von ihm gewünschte Lebensdauer einstellen kann.

Die Steuereinrichtung kann physisch ein Teil des Energiespeichers sein, sie kann jedoch auch ganz oder teilweise physisch vom Energiespeicher getrennt und mittels Datenverbindung mit dem Energiespeicher verbunden sein. Die Steuereinrichtung kann etwa einen Rechner umfassen, in welchem die Informationen über Lebensdauer hinterlegt sind. Dieser Rechner kann im Energiespeicher integriert sein, er kann aber auch entfernt vom Energiespeicher aufgestellt und nur mittels Datenverbindung mit dem Energiespeicher verbunden sein. Der entfernt aufgestellte Rechner wird dann gegebenenfalls auch weitere Steuerungs- und Regelungsaufgaben für den Energiespeicher ausführen bzw. ein bestehender Rechner wird die zusätzlichen erfindungsgemäßen Aufgaben übernehmen.

Die Einstellvorrichtung kann durch physische Schalter, wie Kipp- oder Drehschalter (auch durch Potentiometer), verwirklicht werden. Im Fall eines Kippschalters könnte dieser eine Stellung mit höherer und eine Stellung mit niedrigerer Lebensdauer aufweisen. Im Fall eines Drehschalters könnte die Lebensdauer etwa in einer Skala angegeben sein und es könnten, z.B. aufgrund von Anschlägen des Drehschalters, nur jene Werte einstellbar sein, die tatsächlich erzielbar sind. Der Drehschalter kann in Stufen schaltbar sein oder kontinuierlich. Die Steuereinrichtung kann im Fall von physischen Schaltern dann einfach eine analoge oder digitale Schaltung sein, die durch den Schalter aktiviert wird und einen entsprechenden Wert der Betriebsspannung einstellt. Die Einstellvorrichtung kann aber auch durch eine grafische Benutzeroberfläche (GUI) gebildet werden, wo der Benutzer die gewünschten Werte anwählen und/oder eingeben kann, und die ausgewählten Werte an die Steuereinrichtung übermittelt werden, die diese Daten - in der Regel mittels Software - verarbeitet und als Stellgröße die Betriebsspannung der Speicherkondensatoren anpasst.

Die Steuereinrichtung der Einstellvorrichtung kann so ausgebildet sein, dass die Betriebsspannung des Speicherkondensators in Abhängigkeit einerseits von einer vom Benutzer festgelegten Lebensdauer und andererseits von einer vorgegebenen Umgebungstemperatur eingestellt werden kann.

Die Einstellvorrichtung kann die Einstellung einer beliebigen Lebensdauer ermöglichen, etwa durch einen stufenlosen Drehschalter oder durch händische Eingabe eines - innerhalb festgelegter Grenzen - frei wählbaren Wertes.

Oder die Einstellvorrichtung kann eine Anzeige umfassen, die so ausgebildet ist, dass dem Benutzer aufgrund der in der Steuereinrichtung des Energiespeichers hinterlegten Informationen unterschiedliche mögliche Lebensdauern angezeigt werden und der Benutzer eine dieser Lebensdauern auswählen kann. Denkbar wären auch andere Einstellvorrichtungen mit vorgegebenen Werten, wie eben Kippschalter oder Drehschalter mit endlich vielen vorgegebenen Positionen und damit Lebensdauern.

Im Zusammenhang mit einer Anzeige der Lebensdauer, aber auch unabhängig davon, kann die Einstellvorrichtung eine Anzeige umfassen, die so ausgebildet ist, dass dem Benutzer basierend auf der von ihm festgelegten Lebensdauer angezeigt wird, wie groß der korrespondierende Speicherinhalt ist. Umgekehrt kann die Anzeige - zusätzlich oder alternativ in einer nicht vom Schutzumfang der Erfindung umfassten Aufführungsform - so ausgebildet sein, dass dem Benutzer basierend auf dem von ihm festgelegten Speicherinhalt angezeigt wird, wie groß die korrespondierende Lebensdauer ist.

Mit der vorliegenden Erfindung wird ein zusätzlicher Freiheitsgrad geschaffen, der durch die exponentiellen bzw. logarithmischen Zusammenhänge von Betriebsspannung bzw. Speicherinhalt, Lebensdauer und Temperatur eine große Variabilität der Parameter eines Energiespeichergeräts erlaubt. Aus Sicht des Benutzers kann die Geräteausnützung optimiert werden, aus Herstellersicht sind weniger Gerätevarianten erforderlich, was in beiden Fällen ökonomische Vorteile bedeutet.

Die gegenständliche Erfindung schließt nicht aus, dass die Lebensdauer oder der Speicherinhalt des Energiespeichergeräts über andere Algorithmen direkt - also ohne Eingabe eines Benutzers - von der Steuereinrichtung beeinflusst wird, etwa indem bei sinkender Umgebungstemperatur die Betriebsspannung erhöht wird.

### Kurzbeschreibung der Figuren

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Dabei zeigt
- Fig. 1: ein Kennlinienfeld, wo für bestimmte Betriebsspannungen der Zusammenhang von Lebensdauer und Umgebungstemperatur dargestellt ist,
- Fig. 2: ein Kennlinienfeld, wo für bestimmte Temperaturen der Zusammenhang von Lebensdauer und Speicherinhalt dargestellt ist,
- Fig. 3: eine Kennlinie, wo der Zusammenhang von Speicherinhalt und Betriebsspannung dargestellt ist.

### Ausführung der Erfindung

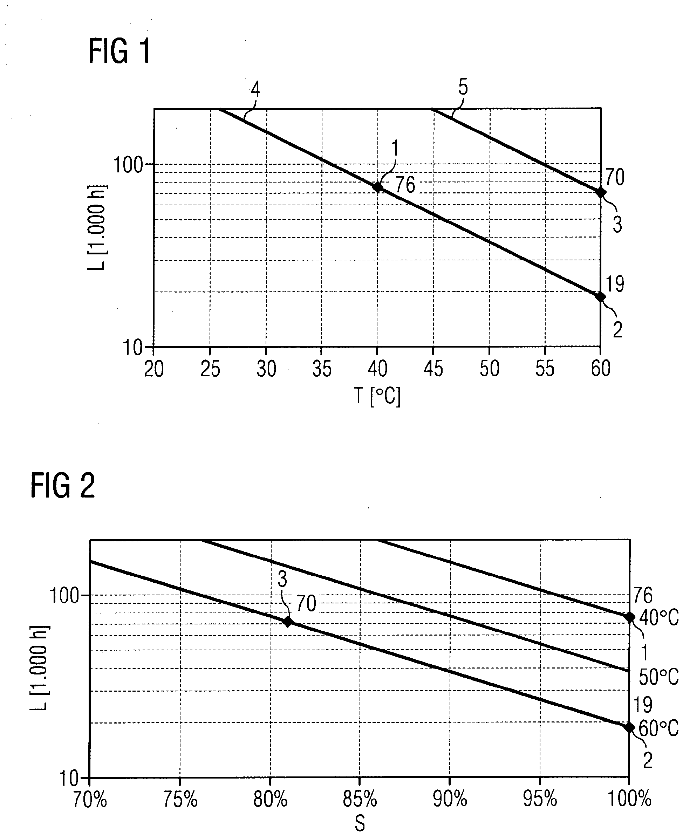

Auf der waagrechten Achse der Fig. 1 ist für einen bestimmten Energiespeicher die Umgebungstemperatur T in °C angegeben, auf der senkrechten Achse die Lebensdauer L in 1.000 Stunden, und zwar im logarithmischen Maßstab von 10.000 bis 200.000 h. Für zwei unterschiedliche Betriebsspannungen ergeben sich zwei unterschiedliche Kennlinien, in diesem Fall aufgrund des logarithmischen Maßstabs annähernd jeweils eine Gerade.

Die erste Kennlinie 4 links gilt für eine bestimmte erste Betriebsspannung. Hier könnte gemäß Arbeitspunkt 1 werksseitig eine Geräteauslegung getroffen worden sein für 40°C Umgebungstemperatur, was eine Lebensdauer L von 76.000 h ergibt. Bei anderen Umgebungstemperaturen T ergibt sich die Lebensdauer L gemäß dieser ersten Kennlinie 4. Ist ein Einsatz des Energiespeichers für 60°C Umgebungstemperatur gewünscht, so sinkt die Lebensdauer L entsprechend auf 19.000 h ab, was durch Arbeitspunkt 2 dargestellt ist. Möchte der Nutzer für 60°C Umgebungstemperatur eine längere Lebensdauer erreichen, kann er den Arbeitspunkt umschalten, das heißt hier, dass die Betriebsspannung herabgesetzt wird. Bei einer Umschaltung auf die zweite Kennlinie 5 rechts ergibt sich für 60°C Umgebungstemperatur eine zweite Betriebsspannung, die niedriger ist als die erste Betriebsspannung, und in einem Arbeitspunkt 3 eine Lebensdauer L von nunmehr 70.000 h. In diesem Fall geht die Umschaltung allerdings auf Kosten von ca. 20% Speicherinhalt im Vergleich zur ersten Kennlinie 4, was in Fig. 2 dargestellt ist. Bei der herabgesetzten Betriebsspannung ergibt sich dann die Lebensdauer L bei anderer Umgebungstemperatur T gemäß der zweiten Kennlinie 5 in Fig. 1.

Fig. 2 zeigt den Zusammenhang von Lebensdauer L und Speicherinhalt S. Dabei ist die Lebensdauer L wieder im logarithmischen Maßstab dargestellt. Der Speicherinhalt S ist relativ zum maximal möglichen Speicherinhalt dargestellt, der bei 100% liegt. Der Zusammenhang ist jeweils für drei verschiedene Umgebungstemperaturen 40°C, 50°C und 60°C dargestellt. Die Arbeitspunkte 1, 2, 3 aus Fig. 1 sind eingezeichnet.

Es wäre nun denkbar, dass diese Kennlinien 4, 5 aus Fig. 1 in der Steuereinrichtung gespeichert sind, auf einer grafischen Benutzeroberfläche der Einstellvorrichtung dargestellt werden und der Benutzer einen Punkt dieser Kennlinien 4, 5 auswählt. Die Steuereinrichtung stellt dann die entsprechende Betriebsspannung ein.

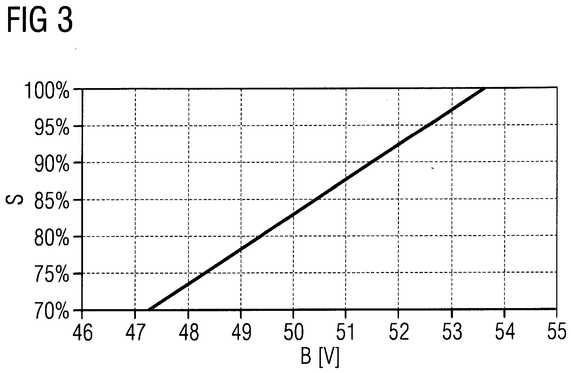

Zusätzlich könnte auch auf der selben grafischen Benutzeroberfläche für Punkte der Kennlinien 4, 5 angezeigt werden, wie groß dann der Speicherinhalt S des Energiespeichers (oder die Pufferzeit) ist, siehe Fig. 2. Dann kann der Benutzer entscheiden, ob er doch eine geringere Lebensdauer L wählt, um nicht zu viel Speicherinhalt S zu verlieren. Es wäre auch denkbar, dass zur Information für den Benutzer eine Kennlinie des Speicherinhalts S (oder der Pufferzeit) in Abhängigkeit der Betriebsspannung B angezeigt wird, wie dies in Fig. 3 dargestellt ist.

Es wäre auch denkbar, dass zur Information für den Benutzer für die gegebene Temperatur T (oder auch für unterschiedliche Temperaturen) Kennlinien der Lebensdauer L in Abhängigkeit des Speicherinhalts S (oder der Pufferzeit) angezeigt werden. Eine beispielhafte Darstellung ist in Fig. 2 gezeigt.

In der Regel verfügt aber jeder Energiespeicher über eine eigene Anzeige, die angibt, wie groß der Speicherinhalt bzw. die Pufferzeit ist, oder diese Information kann mittels Software ausgelesen und an einer Ausgabeeinheit eines Rechners angezeigt werden, welcher über ein Datennetzwerk mit dem Energiespeicher verbunden ist.

### Bezugszeichenliste:

- 1: Arbeitspunkt
- 2: Arbeitspunkt
- 3: Arbeitspunkt
- 4: erste Kennlinie
- 5: zweite Kennlinie
- B: Betriebsspannung
- L: Lebensdauer
- S: Speicherinhalt
- T: Umgebungstemperatur

## Patentansprüche

1. Verfahren : in einer Vorrichtung zum Einstellen eines Arbeitspunktes (1,2,3) eines betriebsbereiten elektrischen Energiespeichers durch einen Benutzer, wobei der Energiespeicher zumindest einen Speicherkondensator umfasst, der ein Superkondensator ist und dessen Lebensdauer (L) bei Normalbetrieb überproportional von der Betriebsspannung (B) abhängt, **dadurch gekennzeichnet, dass** durch die Vorrichtung Informationen über die Lebensdauer (L) des Speicherkondensators in Abhängigkeit von zumindest der Betriebsspannung (B) dem Benutzer zur Verfügung gestellt werden und die Betriebsspannung (B) des Speicherkondensators in Abhängigkeit von einer gewünschten Lebensdauer (L) eingestellt wird, wobei die gewünschte Lebensdauer (L) vom Benutzer festgelegt und mithilfe einer Einstellvorrichtung der Vorrichtung eingestellt wird.

2. Verfahren nach Anspruch 1, **dadurch gekennzeichnet, dass** die Information über die Lebensdauer (L) des Speicherkondensators in einer Steuereinrichtung des Energiespeichers hinterlegt ist und die Betriebsspannung (B) des Speicherkondensators durch die Steuereinrichtung in Abhängigkeit von einer vom Benutzer festgelegten Lebensdauer (L) eingestellt wird.

3. Verfahren nach einem der Ansprüche 1 bis 2, **dadurch gekennzeichnet, dass** Informationen über die Lebensdauer (L) des Speicherkondensators in Abhängigkeit von der Umgebungstemperatur (T) zur Verfügung gestellt werden und die Betriebsspannung (B) des Speicherkondensators durch die Steuereinrichtung in Abhängigkeit einerseits von einer vom Benutzer festgelegten Lebensdauer (L) und andererseits von einer vorgegebenen Umgebungstemperatur (T) eingestellt wird.

4. Verfahren nach einem der Ansprüche 1 bis 3, **dadurch gekennzeichnet, dass** der Benutzer eine gewünschte Lebensdauer (L) von sich aus vorgibt.

5. Verfahren nach einem der Ansprüche 2 oder 3, **dadurch gekennzeichnet, dass** dem Benutzer aufgrund der in der Steuereinrichtung des Energiespeichers hinterlegten Informationen unterschiedliche mögliche Lebensdauern (L) angezeigt werden und der Benutzer eine dieser Lebensdauern (L) auswählt, wonach die Steuereinrichtung die Betriebsspannung (B) entsprechend einstellt.

6. Verfahren nach einem der Ansprüche 1 bis 5, **dadurch gekennzeichnet, dass** dem Benutzer basierend auf der von ihm festgelegten Lebensdauer (L) angezeigt wird, wie groß der korrespondierende Speicherinhalt (S) ist.

7. Vorrichtung zum Einstellen eines Arbeitspunktes (1,2,3) eines betriebsbereiten elektrischen Energiespeichers durch einen Benutzer, wobei der Energiespeicher zumindest einen Speicherkondensator umfasst, der ein Superkondensator ist und dessen Lebensdauer (L) bei Normalbetrieb überproportional von der Betriebsspannung (B) abhängt und wobei diese Vorrichtung zum Durchführen des Verfahrens nach einem der Ansprüche 1 bis 6 ausgebildet ist, wobei die Vorrichtung umfasst:
- eine Steuereinrichtung für den Energiespeicher, in welcher Informationen über die Lebensdauer (L) des Speicherkondensators in Abhängigkeit von zumindest der Betriebsspannung (B) hinterlegt sind und mit welcher die Betriebsspannung (B) des Speicherkondensators in Abhängigkeit von einer gewünschten und vom Benutzer festgelegten Lebensdauer (L) eingestellt werden kann, und
- eine mit der Steuereinrichtung verbundene Einstellvorrichtung, mit welcher der Benutzer zumindest eine von ihm gewünschte Lebensdauer (L) einstellen kann.

8. Vorrichtung nach Anspruch 7, **dadurch gekennzeichnet, dass** die Steuereinrichtung so ausgebildet ist, dass die Betriebsspannung (B) des Speicherkondensators in Abhängigkeit einerseits von einer vom Benutzer festgelegten Lebensdauer (L) und andererseits von einer vorgegebenen Umgebungstemperatur (T) eingestellt werden kann.

9. Vorrichtung nach Anspruch 7 oder 8, **dadurch gekennzeichnet, dass** die Einstellvorrichtung die Einstellung einer beliebigen Lebensdauer (L) ermöglicht.

10. Vorrichtung nach Anspruch 7 oder 8, **dadurch gekennzeichnet, dass** die Einstellvorrichtung eine Anzeige umfasst, die so ausgebildet ist, dass dem Benutzer aufgrund der in der Steuereinrichtung des Energiespeichers hinterlegten Informationen unterschiedliche mögliche Lebensdauern (L) angezeigt werden und der Benutzer entsprechend eine dieser Lebensdauern (L) auswählen kann.

11. Vorrichtung nach einem der Ansprüche 7 bis 10, **dadurch gekennzeichnet, dass** die Einstellvorrichtung eine Anzeige umfasst, die so ausgebildet ist, dass dem Benutzer basierend auf der von ihm festgelegten Lebensdauer (L) angezeigt wird, wie groß der korrespondierende Speicherinhalt (S) ist.

## Claims

1. Method in an apparatus for setting an operating point (1, 2, 3) of an electrical energy store which is ready for operation by a user, wherein the energy store comprises at least one storage capacitor which is a supercapacitor and the service life (L) of which during normal operation disproportionately depends on the operating voltage (B), **characterized in that** the apparatus provides the user with information relating to the service life (L) of the storage capacitor on the basis of the at least one operating voltage (B), and the operating voltage (B) of the storage capacitor is set on the basis of a desired service life (L), wherein the desired service life (L) is stipulated by the user and is set with the aid of a setting apparatus of the apparatus.

2. Method according to Claim 1, **characterized in that** the information relating to the service life (L) of the storage capacitor is stored in a control device of the energy store, and the operating voltage (B) of the storage capacitor is set by the control device on the basis of a service life (L) stipulated by the user.

3. Method according to one of Claims 1 to 2, **characterized in that** information relating to the service life (L) of the storage capacitor is provided on the basis of the ambient temperature (T), and the operating voltage (B) of the storage capacitor is set by the control device on the basis of a service life (L) stipulated by the user, on the one hand, and a predefined ambient temperature (T), on the other hand.

4. Method according to one of Claims 1 to 3, **characterized in that** the user specifies a desired service life (L) of its own accord.

5. Method according to either of Claims 2 and 3, **characterized in that** different possible service lives (L) are displayed to the user on the basis of the information stored in the control device of the energy store, and the user selects one of these service lives (L), according to which the control device accordingly sets the operating voltage (B).

6. Method according to one of Claims 1 to 5, **characterized in that** the size of the corresponding storage content (S) is displayed to the user on the basis of the service life (L) stipulated by the user.

7. Apparatus for setting an operating point (1, 2, 3) of an electrical energy store which is ready for operation by a user, wherein the energy store comprises at least one storage capacitor which is a supercapacitor and the service life (L) of which during normal operation disproportionately depends on the operating voltage (B), and wherein this apparatus is designed to carry out the method according to one of Claims 1 to 6, wherein the apparatus comprises:
- a control device for the energy store, in which information relating to the service life (L) of the storage capacitor is stored on the basis of at least the operating voltage (B) and which can be used to set the operating voltage (B) of the storage capacitor on the basis of a desired service life (L) stipulated by the user, and
- a setting apparatus which is connected to the control device and can be used by the user to set at least one service life (L) desired by the user.

8. Apparatus according to Claim 7, **characterized in that** the control device is designed in such a manner that the operating voltage (B) of the storage capacitor can be set on the basis of a service life (L) stipulated by the user, on the one hand, and a predefined ambient temperature (T), on the other hand.

9. Apparatus according to Claim 7 or 8, **characterized in that** the setting apparatus makes it possible to set any desired service life (L).

10. Apparatus according to Claim 7 or 8, **characterized in that** the setting apparatus comprises a display which is designed such that different possible service lives (L) are displayed to the user on the basis of the information stored in the control device of the energy store and the user can accordingly select one of these service lives (L) .

11. Apparatus according to one of Claims 7 to 10, **characterized in that** the setting apparatus comprises a display which is designed in such a manner that the size of the corresponding storage content (S) is displayed to the user on the basis of the service life (L) stipulated by the user.

## Revendications

1. Procédé, dans un dispositif de réglage, d'un point de travail (1, 2, 3) d'un accumulateur d'énergie électrique prêt à fonctionner par un utilisateur, l'accumulateur d'énergie comportant au moins un condensateur de stockage qui est un supercondensateur et dont la durée de vie (L), en service normal, est fonction de manière disproportionnée de la tension de service (B), **caractérisé en ce que** le dispositif met à disposition de l'utilisateur des informations concernant la durée de vie (L) du condensateur de stockage en fonction d'au moins la tension de service (B), le réglage de la tension de service (B) du condensateur de stockage se faisant en fonction d'une durée de vie (L) désirée, la durée de vie (L) désirée étant déterminée par l'utilisateur et réglée à l'aide d'un organe de réglage du dispositif.

2. Procédé selon la revendication 1, **caractérisé en ce que** l'information sur la durée de vie (L) du condensateur de stockage est enregistrée dans une unité de commande de l'accumulateur d'énergie et la tension de service (B) du condensateur de stockage est réglée par l'unité de commande en fonction d'une durée de vie (L) fixée par l'utilisateur.

3. Procédé selon l'une des revendications 1 à 2, **caractérisé en ce que** des informations sur la durée de vie (L) du condensateur de stockage sont mises à disposition en fonction de la température ambiante (T), la tension de service (B) du condensateur de stockage étant réglée par l'unité de commande en fonction d'une part d'une durée de vie (L) fixée par l'utilisateur et d'autre part d'une température ambiante (T) prédéfinie.

4. Procédé selon l'une des revendications 1 à 3, **caractérisé en ce que** l'utilisateur prédéfinit une durée de vie (L) désirée lui-même.

5. Procédé selon l'une des revendications 2 ou 3, **caractérisé en ce que** différentes durées de vie (L) possibles sont affichées à l'utilisateur grâce aux informations enregistrées dans l'unité de commande de l'accumulateur d'énergie et l'utilisateur choisit une desdites durées de vie (L) à la suite de quoi l'unité de commande règle la tension de service (B) en conséquence.

6. Procédé selon l'une des revendications 1 à 5, **caractérisé en ce que,** sur la base de la durée de vie (L) fixée par l'utilisateur, le volume du contenu de la mémoire (S) est affiché à celui-ci.

7. Dispositif de réglage d'un point de travail (1, 2, 3) d'un accumulateur d'énergie électrique prêt à fonctionner par un utilisateur, l'accumulateur d'énergie comportant au moins un condensateur de stockage qui est un supercondensateur et dont la durée de vie (L), en service normal, dépend de façon disproportionnée de la tension de service (B), ledit dispositif étant apte à mettre en œuvre le procédé selon l'une quelconque des revendications 1 à 6, le dispositif comportant :
- une unité de commande pour l'accumulateur d'énergie dans laquelle des informations concernant la durée de vie (L) du condensateur de stockage en fonction d'au moins la tension de service (B) sont enregistrées et moyennant laquelle la tension de service (B) du condensateur de stockage peut être réglée en fonction d'une durée de vie (L) désirée et fixée par l'utilisateur, et
- un organe de réglage relié à l'unité de commande permettant à l'utilisateur de régler au moins une durée de vie (L) qu'il désire.

8. Dispositif selon la revendication 7, **caractérisé en ce que** l'unité de commande est conçue de manière à permettre le réglage de la tension de service (B) du condensateur de stockage en fonction d'une part d'une durée de vie (L) fixée par l'utilisateur et d'autre part d'une température ambiante (T) prédéfinie.

9. Dispositif selon la revendication 7 ou 8, **caractérisé en ce que** l'organe de réglage permet le réglage d'une durée de vie (L) voulue.

10. Dispositif selon la revendication 7 ou 8, **caractérisé en ce que** l'organe de réglage comporte un affichage conçu pour afficher à l'utilisateur sur la base des informations enregistrées dans l'unité de commande de l'accumulateur d'énergie, différentes durées de vie (L) possibles, l'utilisateur pouvant choisir une desdites durées de vie (L) en conséquence.

11. Dispositif selon l'une des revendications 7 à 10, **caractérisé en ce que** l'organe de réglage comporte un affichage conçu pour afficher à l'utilisateur, sur la base de la durée de vie (L) fixée par lui, le volume du contenu de la mémoire (S) correspondante.
